# FASCICULE DE BREVET EUROPEEN

(11) **EP 3 966 922 B1**
(45) Date de publication et mention de la délivrance du brevet: **07.06.2023**
(21) Numéro de dépôt: 20722370.2
(22) Date de dépôt: 06.05.2020
(51) Int. Cl.: H02M 7/49, H02M 3/335, H02M 7/483, H02M 3/158, H02M 1/00

(54) **CONVERTISSEUR DE TENSION MULTI NIVEAUX À STOCKAGE D'ÉNERGIE ADDITIONNEL OPTIMISÉ**
MEHRSTUFIGER SPANNUNGSWANDLER MIT OPTIMIERTER ZUSÄTZLICHER ENERGIESPEICHERUNG
MULTI-LEVEL VOLTAGE CONVERTER WITH OPTIMISED ADDITIONAL ENERGY STORAGE

(30) Priorité: 07.05.2019 FR 1904790
(43) Date de publication de la demande: 16.03.2022
(73) Titulaire: Supergrid Institute, 69100 Villeurbanne (FR); Ecole Centrale de Lyon, 69130 Ecully (FR); Université Claude Bernard Lyon 1, 69100 Villeurbanne (FR); Institut National des Sciences Appliquées de Lyon, 69100 Villeurbanne (FR); Centre national de la recherche scientifique, 75016 Paris (FR)
(72) Inventeur: ERRIGO, Florian, 69007 LYON (FR); LAGIER, Thomas, 69007 LYON (FR); CHEDOT, Laurent, 69007 LYON (FR); SARI, Ali, 69007 LYON (FR); VENET, Pascal, 69007 LYON (FR)
(74) Mandataire: Opilex
(86) Numéro de dépôt international: PCT/EP2020/062637
(87) Numéro de publication internationale: WO 2020/225332

(56) Documents cités:
- US-A1- 2017 190 434
- US-A1- 2018 145 510
- CH ANIL BHARADWAJ ET AL: "Modular multilevel E-STATCOM considering distributed energy storage at the dc link", 2016 IEEE 7TH POWER INDIA INTERNATIONAL CONFERENCE (PIICON), IEEE, 25 novembre 2016 (2016-11-25), pages 1-6, XP033235276, DOI: 10.1109/POWERI.2016.8077287
- Aoki Tadahito ET AL: "A method to reduce the output voltage ripple in a switched mode rectifier with a feedforward circuit", ELECTRICAL ENGINEERING IN JAPAN, vol. 109, no. 1, 1 January 1989 (1989-01-01), pages 100-107, XP055786782, US ISSN: 0424-7760, DOI: 10.1002/eej.4391090111 Retrieved from the Internet: URL:https://onlinelibrary.wiley.com/doi/pd fdirect/10.1002/eej.4391090111>

## Description

L'invention concerne les réseaux haute tension à courant continu, interconnectés avec des réseaux haute tension à courants alternatifs, et en particulier des convertisseurs de tension multi niveaux présentant une fonction de capacité de stockage d'énergie additionnelle.

Les structures à convertisseur de tension multi niveaux sont basées sur la mise en série de sous-modules incluant chacun une cellule de stockage. De telles structures s'avèrent correctement adaptées pour le transport de puissance entre un réseau continu et un réseau alternatif.

Afin de répondre à des demandes croissantes de services systèmes soumises par des opérateurs réseau, de tels convertisseurs proposent des solutions intégrant une capacité de stockage d'énergie additionnelle pour renforcer la sécurité des installations électriques en permettant de répondre à une surcharge ou absorber un excès de puissance temporaire côté continu ou côté alternatif.

Le document EP2502340 décrit notamment un dispositif de stockage d'énergie supplémentaire pour convertisseur modulaire multi-niveaux, connecté aux bornes de l'élément capacitif d'un sous-module du convertisseur. Le dispositif de stockage d'énergie supplémentaire inclut un convertisseur de type DC-DC bidirectionnel et une batterie rechargeable. Le convertisseur DC-DC présente une interface connectée aux bornes de l'élément capacitif du sous-module, et une autre interface connectée aux bornes de sa batterie.

Les documents suivants font partie de l'état de l'art de la présente demande: US2017/190434, US2018/145510, CH ANIL BHARADWAJ ET AL: "Modular multilevel E-STATCOM considering distributed energy storage at the de link",2016 IEEE 7TH POWER INDIA INTERNATIONAL CONFERENCE (PIICON), IEEE, 25 novembre 2016 (2016-11-25), pages 1-6, XP033235276,DOI: 10.1109/POWERI.2016.8077287 et Aoki Tadahito ET AL: "A method to reduce the output voltage ripple in a switched mode rectifier with a feedforward circuit",ELECTRICAL ENGINEERING IN JAPAN, vol. 109, no. 1, 1 janvier 1989 (1989-01-01), pages 100-107, XP055786782,US ISSN: 0424-7760, DOI: 10.1002/ eej.4391090111.

De telles solutions peuvent être confrontées à des limites de leur réponse dynamique. Par ailleurs, la fourniture de cette fonctionnalité supplémentaire peut induire un surcoût non négligeable, qui limite fortement la diffusion de telles solutions.

L'invention vise à résoudre un ou plusieurs de ces inconvénients. L'invention porte ainsi sur un convertisseur de tension multi-niveaux, tel que défini dans la revendication 1.

L'invention porte également sur les variantes des revendications dépendantes. L'homme du métier comprendra que chacune des caractéristiques des variantes des revendications dépendantes ou de la description peut être combinée indépendamment aux caractéristiques d'une revendication indépendante, sans pour autant constituer une généralisation intermédiaire.

D'autres caractéristiques et avantages de l'invention ressortiront clairement de la description qui en est faite ci-après, à titre indicatif et nullement limitatif, en référence aux dessins annexés, dans lesquels :
[Fig.1] illustre schématiquement une configuration d'une application particulière de convertisseur de tension de type modulaire multi-niveaux ;
[Fig.2] illustre schématiquement un exemple de composants d'un demi-bras ;
[Fig.3] illustre schématiquement un exemple de sous-module d'un demi-bras d'un convertisseur de tension multi-niveaux selon l'invention ;
[Fig.4] illustre un exemple de configuration d'un convertisseur continu/continu du sous-module de la figure 3 ;
[Fig.5] illustre un exemple de circuit de commutation d'un sous-module ;
[Fig.6] illustre un autre exemple de configuration d'un convertisseur continu-continu du sous-module de la figure 3.

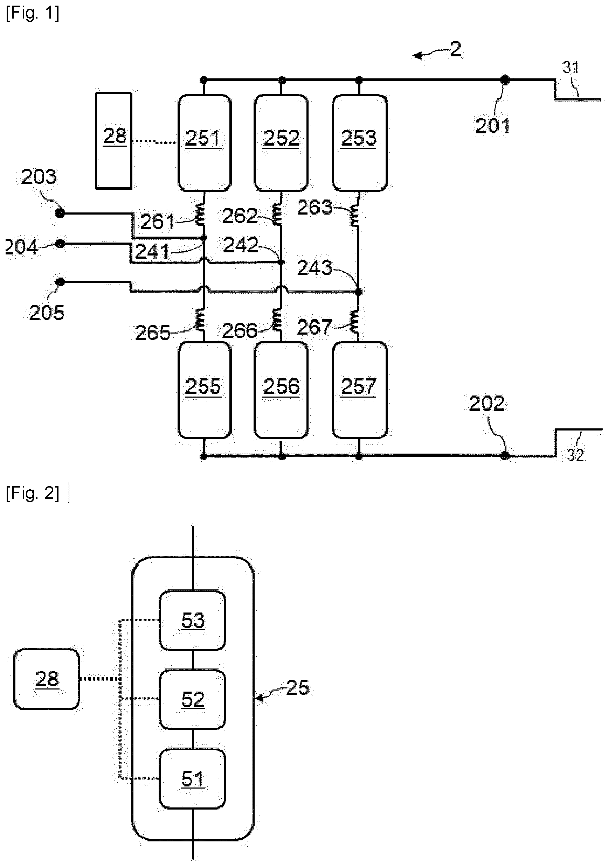

La figure 1 illustre schématiquement la structure d'un exemple de convertisseur de tension de type modulaire multi-niveaux 2 pouvant être mis en oeuvre selon l'invention. De façon connue en soi, un convertisseur de tension modulaire multi-niveaux 2 est configuré pour convertir une tension continue en une tension alternative et réciproquement.

Le convertisseur 2 comporte une interface côté continu et une interface coté alternatif. L'interface côté continu présente deux pôles 201 et 202. Les pôles 201 et 202 sont ici connectés respectivement à des lignes hautes tension 31 et 32. Le convertisseur 2 comporte ici des bornes d'entrée 203 à 205 au niveau de son interface côté alternatif, correspondant à des phases respectives d'un réseau alternatif.

Les bornes d'entrée 203 à 205 sont connectées à des noeuds intermédiaires respectifs 241 à 243. Pour chacune des phases, le convertisseur 2 comporte un premier bras de conversion connecté entre son noeud intermédiaire et le pôle 201, et un deuxième bras de conversion connecté entre son noeud intermédiaire et le pôle 202. Ainsi, le convertisseur 2 comporte :
- un premier demi-bras, ou bras de conversion supérieur 251, connecté entre le pôle 201 et le noeud intermédiaire 241 et un premier bras de conversion inférieur 255, connecté entre le pôle 202 et le noeud intermédiaire 241. Les bras de conversion 251 et 255 sont ici connectés en série respectivement avec des inductances 261 et 265 ;
- un deuxième demi-bras, ou bras de conversion supérieur 252, connecté entre le pôle 201 et le noeud intermédiaire 242 et un deuxième bras de conversion inférieur 256, connecté entre le pôle 202 et le noeud intermédiaire 242. Les bras de conversion 252 et 256 sont ici connectés en série respectivement avec des inductances 262 et 266 ;
- un troisième demi-bras, ou bras de conversion supérieur 253, connecté entre le pôle 201 et le noeud intermédiaire 243 et un premier bras de conversion inférieur 257, connecté entre le pôle 202 et le noeud intermédiaire 243. Les bras de conversion 253 et 257 sont ici connectés en série respectivement avec des inductances 263 et 267.

Le convertisseur 2 comprend en outre un circuit de commande 28, destiné notamment à commander le fonctionnement des différents sous-modules des bras.

La figure 2 est une représentation schématique d'un exemple de demi-bras 25. Le demi-bras 25 comprend des sous-modules 51, 52 et 53 connectés en série. Chacun des sous-modules 51 à 53 est commandé par le circuit de commande 28. Lorsqu'un sous-module est actif, il est connecté une partie du temps en série avec les autres sous-modules, ce qui aboutit à la charge ou à la décharge d'un élément capacitif de stockage d'énergie. Les sous-modules 51 à 53 peuvent être en un nombre différent de celui illustré. Pour une tension continue nominale Unom entre les pôles 201 et 202 du convertisseur de tension modulaire multiniveaux 2 selon l'invention, chaque demi-bras inclut avantageusement un nombre nm de sous-module en série satisfaisant la relation Unom/nm < 50000 Volts, et de préférence Unom/nm < 7000 Volts.

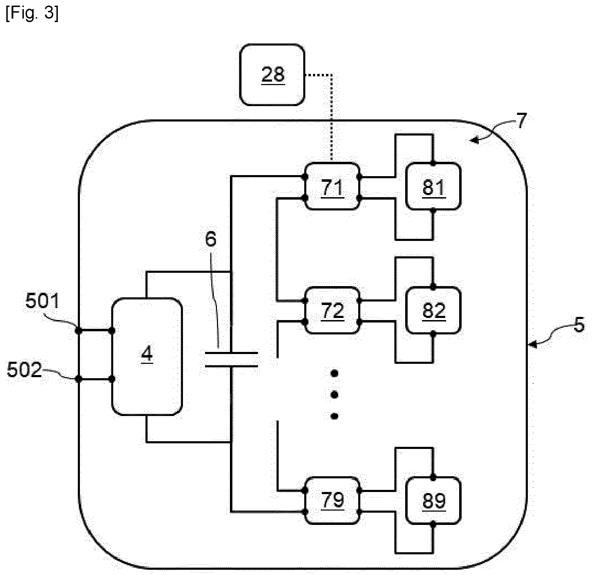

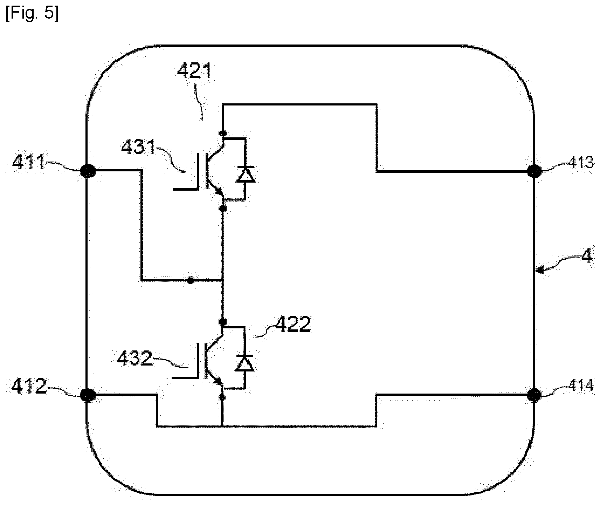

La figure 3 est une représentation schématique d'un exemple de sous-module 5 selon un exemple de mode de réalisation de l'invention. Le sous-module 5 comporte une interface de connexion pour sa connexion en série avec d'autres sous-modules. L'interface de connexion comporte deux bornes 501 et 502. Le sous-module 5 comporte un élément capacitif de stockage d'énergie électrique 6, sous la forme d'un condensateur. L'élément capacitif 6 est connecté aux bornes d'un circuit 4. Le circuit 4 est configuré pour contourner sélectivement l'élément capacitif ou le connecter en série entre les bornes 501 et 502 de l'interface de connexion. Un exemple de circuit 4 sera davantage détaillé en référence à la figure 5.

Le module 5 est un sous-module amélioré, permettant au convertisseur 2 de gérer transitoirement une fluctuation de puissance par rapport à son point de fonctionnement (par exemple fournir ou absorber une différence de puissance entre le côté continu et le côté alternatif). À cet effet, le sous-module amélioré 5 comporte plusieurs dispositifs d'échange d'énergie électrique 7. Plusieurs ou l'ensemble des sous-modules d'un demi-bras peuvent être des sous-modules de type amélioré 5.

Chaque dispositif d'échange d'énergie électrique 7 comporte un dispositif de stockage d'énergie électrique et un convertisseur continu/continu. Le convertisseur continu/continu présente une première interface par l'intermédiaire de laquelle il est connecté en série avec d'autres convertisseurs continu/continu de dispositifs d'échange d'énergie électrique 7 aux bornes de l'élément capacitif 6, et ce convertisseur continu/continu présente une deuxième interface connectée aux bornes de son dispositif de stockage d'énergie électrique.

Ainsi, un dispositif 7 comporte un convertisseur continu/continu 71 ayant sa deuxième interface connectée aux bornes d'un dispositif de stockage d'énergie électrique 81, un autre dispositif 7 comporte un convertisseur continu/continu 72 ayant sa deuxième interface connectée aux bornes d'un dispositif de stockage d'énergie électrique 82, et un autre dispositif 7 comporte un convertisseur continu/continu 79 ayant sa deuxième interface connectée aux bornes d'un dispositif de stockage d'énergie électrique 89. Les différents convertisseurs continu/continu sont commandés par l'intermédiaire du circuit de commande 28. Les différents convertisseurs continu/continu peuvent être également commandés par un circuit de commande indépendant. Ce circuit de commande indépendant peut communiquer avec le circuit de commande 28.

Chaque convertisseur continu/continu comprend un circuit de commutation, configuré pour commander sélectivement une décharge ou une recharge du dispositif de stockage d'énergie électrique par l'intermédiaire de la première interface. Une telle charge/décharge pourra satisfaire aux besoins d'un surcroît de puissance à fournir ou à absorber côté continu ou côté alternatif, requis par un opérateur du réseau électrique. Ce circuit de commutation inclut des commutateurs ayant une fréquence de commutation supérieure à 10 kHz, de préférence au moins égale à 15 kHz, et avantageusement supérieure à 20 kHz. Ce circuit de commutation peut par exemple comprendre des commutateurs de type transistor MOSFET, ou des transistors en matériau semi-conducteur présentant une bande interdite au moins égale à 2 eV (par exemple GaN ou SiC). Dans l'hypothèse d'utilisation de commutateurs de type transistors MOS, au moins trois dispositifs 7 peuvent être connectés en série aux bornes de l'élément capacitif 6. Dans l'hypothèse d'utilisation de commutateurs de type transistors à semi-conducteur à bande interdite d'au moins 2eV, au moins deux dispositifs 7 peuvent être connectés en série aux bornes de l'élément capacitif 6.

L'utilisation de dispositifs 7 munis de circuits de commutation permet d'assurer un découplage total entre l'élément capacitif 6 et des dispositifs de stockage d'énergie électrique additionnels. En disposant de plusieurs dispositifs 7 connectés en série, on peut réduire la tension appliquée aux bornes de chacun d'entre eux. On peut ainsi réduire les contraintes sur les circuits de commutation de chacun de ces dispositifs 7, et utiliser des commutateurs ayant une fréquence de commutation supérieure à 10 kHz. Le dimensionnement des circuits de commutation de chacun de ces dispositifs 7 est en outre facilité, du fait que le courant traversant ce circuit de commutation est nettement plus faible que le courant traversant l'élément capacitif 6. Des commutateurs de type IGBT calibrés pour résister aux niveaux de tension appliqués aux bornes d'un élément capacitif 6 pourraient par exemple s'avérer trop coûteux et inadaptés, car ce calibrage les destine à de plus fortes valeurs de courant et de plus faibles valeurs de fréquence de commutation. Par ailleurs, de tels commutateurs de type IGBT présenteraient de fortes valeurs d'inductance de lissage, des pertes importantes et un encombrement élevé. L'utilisation de commutateurs selon l'invention permet de réduire le dimensionnement des inductances de lissage, l'encombrement des circuits de commutation, ainsi que les pertes de commutation.

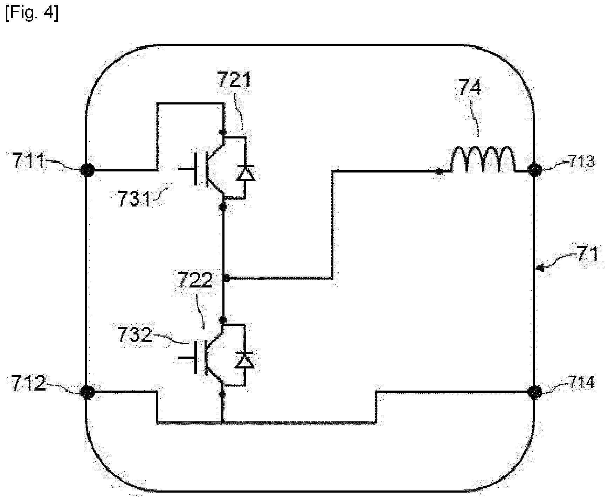

La figure 4 illustre un exemple de configuration d'un convertisseur 71 du sous-module 5 de la figure 3. Le convertisseur 71 comporte une première interface munie de bornes 711 et 712. Les bornes 711 et 712 sont destinées à la connexion en série du convertisseur 71 entre les bornes de l'élément capacitif 6. Le convertisseur 71 comporte une deuxième interface munie de bornes 713 et 714. Les bornes 713 et 714 sont destinées à être connectées aux bornes d'un dispositif de stockage d'énergie électrique 81.

Le convertisseur 71 est de type DC-DC réversible en courant, ici à demi-pont. Le convertisseur 71 comporte des transistors 721 et 722 entre les bornes 711 et 712. Les transistors 721 et 722 sont commandés par leur électrode de commande 731 et 732. Le circuit de commande 28 peut commander les commutations des transistors 721 et 722. Une inductance de lissage 74 est connectée entre la borne 713 et un noeud intermédiaire entre les transistors 721 et 722. Une électrode de conduction du transistor 721 est connectée à la borne 711. Une électrode de conduction du transistor 722 est connectée à la fois à la borne 712 et à la borne 714.

En raison de la modulation mise en oeuvre par le circuit 4 aux bornes d'un élément capacitif 6, le courant circulant vers cet élément capacitif 6 contient des oscillations basses fréquence à la fréquence et au double de la fréquence du réseau. Des harmoniques d'ordre supérieur peuvent également être présentes du fait des commutations de découpage. Ces oscillations peuvent affecter l'amplitude du courant dans les différents dispositifs 7. L'amplitude de ces oscillations est relativement importante par rapport à la composante continue du courant traversant les dispositifs de stockage des dispositifs 7.

Les circuits de commutation des convertisseurs continu/continu d'un sous-module amélioré 5 sont avantageusement configurés pour commander sélectivement une décharge ou une recharge de leurs dispositifs de stockage d'énergie électrique respectifs, en respectant les conditions suivantes. De façon générale, ces circuits de commutation seront commandés de façon à filtrer la composante alternative de la tension présente aux bornes de l'élément capacitif 6. Pour une tension Uc(t) aux bornes de l'élément capacitif 6, on peut définir celle-ci par la relation Uc(t)= Um+Uh(t), Um étant la composante continue de cette tension Uc(t) et Uh(t) étant la composante oscillante ou harmonique de cette tension Uc(t) avec |Uh| la valeur maximale de l'oscillation de tension Uh(t). La tension Us(t) aux bornes de la deuxième interface de chacun des convertisseurs continu/continu peut être défini par Us(t)=Usm+Ush(t), Usm étant la composante continue de cette tension Us (t) et Ush(t) étant la composante oscillante ou harmonique de cette tension Us(t). Ush(t) vérifie alors la relation Ush(t)<0,3*|Uh|/ns, avantageusement Ush(t)<0,1* |Uh|/ns, avec ns le nombre de dispositifs d'échange d'énergie électrique dans le sous-module amélioré 5.

Un tel filtrage de la composante alternative présente aux bornes de l'élément capacitif 6 peut par exemple être mis en oeuvre en application un rapport cyclique α0(t) pour un convertisseur selon la figure 4, avec α0(t)= Us(t)/(Uc(t)/ns).

Le rapport cyclique α(t) = α0(t)+ dα(t) peut alors être appliqué, avec dα un terme correctif dépendant de la différence entre un paramètre de consigne et un paramètre mesuré. Le paramètre de consigne et le paramètre mesuré peuvent correspondre à un courant traversant un dispositif de stockage d'énergie électrique associé au convertisseur continu/continu ou à une tension aux bornes de ce dispositif de stockage d'énergie électrique.

En limitant l'amplitude du courant traversant les dispositifs de stockage d'un dispositif 7, on peut limiter le dimensionnement des composants des circuits de commutation. Dans l'exemple de la figure 4, le dimensionnement électrique et le volume de l'inductance de lissage 74 peuvent par exemple être réduits en conséquence. Une telle configuration permet ainsi de limiter fortement le prix de revient d'un sous-module 5 amélioré.

La figure 5 illustre un exemple de circuit 4. Le circuit 4 est ici de type à demi-pont. On peut également envisager d'utiliser un circuit 4 en pont complet. Le circuit 4 comporte ici des bornes 411 et 412 pour sa connexion en série avec d'autres sous-modules. Le circuit 4 comporte des bornes 413 et 414 pour sa connexion aux bornes d'un élément capacitif 6. Un interrupteur commandé 421 de type IGBT, GTO ou IGCT présente une électrode de commande 431. L'interrupteur 421 est connecté entre un noeud intermédiaire et la borne 413. Le noeud intermédiaire est connecté à la borne 411. Un interrupteur commandé 422 de type IGBT, GTO ou IGCT présente une électrode de commande 432. L'interrupteur 422 est connecté entre le noeud intermédiaire et la borne 412. La borne 412 est connectée à la bande 414.

Les commutations des interrupteurs 421 et 422 sont commandées par le circuit de commande 28. Dans un premier état dit commandé (ou 'on' en langue anglaise), l'interrupteur 422 est ouvert pour interrompre la conduction dans une première branche, et l'interrupteur 421 est fermé, de façon à connecter l'élémentcapacitif 6 entre les bornes 411 et 412.

Dans un deuxième état dit non commandé (ou 'off' en langue anglaise), l'interrupteur 422 est fermé et l'interrupteur 421 est ouvert. La première branche incluant l'interrupteur 422 contourne ainsi l'élément capacitif 6. L'élément capacitif 6 est par ailleurs déconnecté de la borne 411 par l'intermédiaire de l'interrupteur 421.

De façon générale, il est souhaitable de disposer d'un convertisseur efficace, compact, de faible puissance qui utilise au mieux les composants de puissance. Ainsi, avec un circuit 4 comportant des interrupteurs commandés (dont un exemple est détaillé à la figure 5), ces commutateurs sont configurés pour appliquer sélectivement une tension U aux bornes de l'élément capacitif, pour commuter avec une fréquence f, et pour supporter un courant I. En comparaison, les commutateurs des convertisseurs 71, 72... (par exemple les transistors 721 et 722) sont soumis à une tension U/ns et dimensionnés pour supporter un courant inférieur à I et leur fréquence de commutation est supérieure à f. Avantageusement, les commutateurs des convertisseurs 71, 72... ont une fréquence de commutation au moins 4 fois supérieure à f. Avantageusement, les commutateurs des convertisseurs 71, 72... sont dimensionnés pour supporter un courant au moins 4 fois inférieur à I.

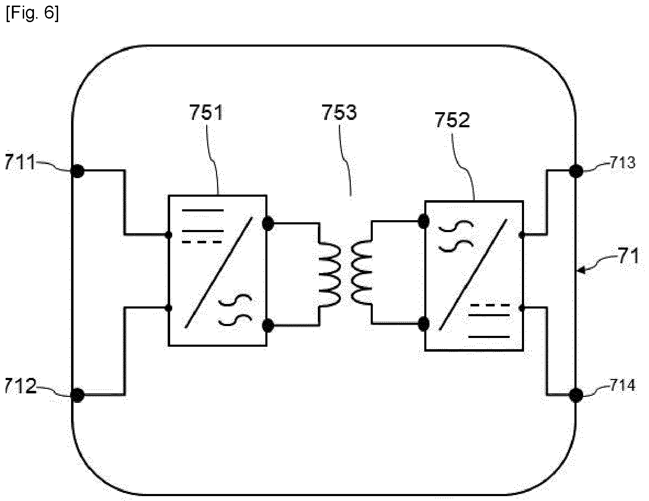

La figure 6 est une illustration schématique d'une autre configuration d'un convertisseur continu/continu 71 pour un sous-module amélioré 5. Le convertisseur 71 comporte une première interface munie de bornes 711 et 712. Les bornes 711 et 712 sont destinées à la connexion en série du convertisseur 71 entre les bornes de l'élément capacitif 6. Le convertisseur 71 comporte une deuxième interface munie de bornes 713 et 714. Les bornes 713 et 714 sont destinées à être connectées aux bornes d'un dispositif de stockage d'énergie électrique 81 (par exemple une batterie de supercondensateurs ou d'accumulateurs).

Le convertisseur 71 comporte un convertisseur continu/alternatif 751, dont l'interface continue est connectée aux bornes 711 et 712. Le convertisseur 71 comporte par ailleurs un convertisseur continu/alternatif 752, dont l'interface continue est connectée aux bornes 713 et 714. Les interfaces côté alternatif des convertisseurs 751 et 752 sont connectées par l'intermédiaire d'un transformateur 753.

L'exemple décrit et illustré auparavant est de type modulaire multi-niveaux mais l'invention s'applique également à d'autres types de convertisseurs multi-niveaux tels qu'à ponts en H cascadés (pour Cascaded H Bridge en langue anglaise) ou à ponts en série (pour Séries Bridge Converter en langue anglaise).

## Revendications

1. Convertisseur de tension multi-niveaux (2), configuré pour convertir une tension continue en une tension alternative, comportant :
- une interface continu comportant des premier et deuxième pôles (201, 202), et une interface alternatif (203, 204, 205) ;
- au moins un bras, comportant un demi-bras supérieur (253) connecté entre le premier pôle (201) et un noeud intermédiaire (243), et comportant un demi-bras inférieur (257) connecté entre le deuxième pôle (202) et le noeud intermédiaire (243), chaque demi-bras incluant plusieurs sous-modules connectés en série (51, 52, 53), les sous-modules (5) comportant chacun un élément capacitif (6) de stockage d'énergie et un circuit (4) pour contourner sélectivement l'élément capacitif ou le connecter en série avec les autres sous-modules du demi-bras ; le noeud intermédiaire (243) étant configuré pour être connecté à un réseau AC via l'interface alternatif (203;204;205);
- **caractérisé en ce qu'**au moins un sous-module (5) est un sous-module amélioré incluant plusieurs dispositifs d'échange d'énergie électrique (7), comprenant chacun :
- un dispositif de stockage d'énergie électrique (81) ;
- un convertisseur continu/continu (71) présentant une première interface (711, 712), et présentant une deuxième interface (713, 714) connectée aux bornes du dispositif de stockage d'énergie électrique (81), le convertisseur continu/continu comprenant en outre un circuit de commutation (721, 722) configuré pour commander sélectivement une décharge ou une recharge du dispositif de stockage d'énergie électrique (81) par l'intermédiaire de la première interface, de sorte que, pour une tension Uc(t) aux bornes de l'élément capacitif de ce sous-module amélioré, avec Uc(t)= Um+Uh(t), Um étant la composante continue de cette tension Uc(t) et Uh(t) étant la composante oscillante de cette tension Uc(t), avec |Uh| la valeur maximale de l'oscillation de tension Uh(t), la tension Us(t) aux bornes de la deuxième interface du convertisseur continu/continu étant définie par Us(t)=Usm+Ush(t), Usm étant la composante continue de cette tension Us (t) et Ush(t) étant la composante oscillante de cette tension Us(t), Ush(t) vérifiant la relation Ush(t)<0,3*|Uh|/ns, avec ns le nombre de dispositifs d'échange d'énergie électrique de ce sous-module amélioré, le circuit de commutation (721, 722) incluant des commutateurs ayant une fréquence de commutation supérieure à 10kHz;
- les premières interfaces (711, 712) des convertisseurs continu/continu (7) étant connectées en série entre les bornes de l'élément capacitif du sous-module.

2. Convertisseur de tension multi-niveaux (2) selon la revendication 1, dans lequel ledit circuit de commutation inclut des commutateurs de type transistor MOSFET et/ou de type transistor en matériau semi-conducteur présentant une bande interdite au moins égale à 2eV.

3. Convertisseur de tension multi-niveaux (2) selon la revendication 2, dans lequel ledit circuit de commutation inclut :
- soit des commutateurs de type transistor MOSFET et dans lequel le sous-module amélioré (5) inclut au moins trois desdits dispositifs d'échange d'énergie électrique (7) ;
- soit des commutateurs de type transistor en matériau semi-conducteur présentant une bande interdite au moins égale à 2eV inclut au moins deux desdits dispositifs d'échange d'énergie électrique (7).

4. Convertisseur de tension multi-niveaux (2) selon l'une quelconque des revendications précédentes, dans lequel chacun desdits sous-modules est un sous-module amélioré.

5. Convertisseur de tension multi-niveaux (2) selon l'une quelconque des revendications précédentes, présentant une tension continue nominale Unom, chaque demi-bras incluant un nombre nm de sous-modules connectés en série, avec Unom/nm<50000 volts.

6. Convertisseur de tension multi-niveaux (1) selon l'une quelconque des revendications précédentes, dans lequel lesdits convertisseurs continu/continu présentent une configuration réversible en courant.

7. Convertisseur de tension multi-niveaux (1) selon la revendication 6, dans lequel le rapport cyclique α0 des convertisseurs continu/continu est défini de sorte que α0(t)=Us(t)/(Uc(t)/ns).

8. Convertisseur de tension multi-niveaux (1) selon l'une quelconque des revendications précédentes, dans lequel :
- le circuit (4) pour contourner sélectivement l'élément capacitif comprend des commutateurs configurés pour appliquer sélectivement une tension U aux bornes de l'élément capacitif, configurés pour commuter avec une fréquence f et dimensionnés pour supporter un courant I ;
- les commutateurs du circuit de commutation sont soumis à une tension U/ns, sont dimensionnés pour supporter un courant inférieur à I, les commutateurs du circuit de commutation ayant une fréquence de commutation supérieure à f.

9. Convertisseur de tension multi-niveaux (1) selon la revendication 8, dans lequel les commutateurs du circuit de commutation ont une fréquence de commutation au moins 4 fois supérieure à f.

10. Convertisseur de tension multi-niveaux (1) selon la revendication 8 ou 9, dans lequel les commutateurs du circuit de commutation sont dimensionnés pour supporter un courant au moins 4 fois inférieur à I.

## Patentansprüche

1. Mehrstufiger Spannungswandler (2), der konfiguriert ist, um eine Gleichspannung in eine Wechselspannung umzuwandeln, aufweisend:
- eine Gleichspannungsschnittstelle, die einen ersten und einen zweiten Pol (201, 202) und eine Wechselspannungsschnittstelle (203, 204, 205) aufweist;
- mindestens einen Zweig, der einen oberen Halbzweig (253) aufweist, der zwischen den ersten Pol (201) und einen Zwischenknoten (243) geschaltet ist, und der einen unteren Halbzweig (257) aufweist, der zwischen den zweiten Pol (202) und den Zwischenknoten (243) geschaltet ist, wobei jeder Halbzweig mehrere in Reihe geschaltete Untermodule (51, 52, 53) enthält, wobei die Untermodule (5) jeweils ein kapazitives Element (6) zur Energiespeicherung und eine Schaltung (4) zum selektiven Überbrücken des kapazitiven Elements oder zum Zusammenschalten desselben in Reihe mit den anderen Untermodulen des Halbzweigs aufweisen; wobei der Zwischenknoten (243) konfiguriert ist, um über die Wechselschnittstelle (203; 204; 205) mit einem Wechselstromnetz zusammengeschaltet zu sein;
- **dadurch gekennzeichnet, dass** mindestens ein Untermodul (5) ein verbessertes Untermodul ist, das mehrere elektrische Energieaustauschvorrichtungen (7) enthält, wobei jede umfasst:
- eine Vorrichtung zur elektrischen Energiespeicherung (81);
- einen Gleichspannungswandler (71) mit einer ersten Schnittstelle (711, 712), und mit einer zweiten Schnittstelle (713, 714), die mit den Anschlüssen der Vorrichtung zur elektrischen Energiespeicherung (81) zusammengeschaltet ist, wobei der Gleichspannungswandler ferner eine Wechselschaltung (721, 722) aufweist, die konfiguriert ist, um eine Entladung oder eine Aufladung der Vorrichtung zur elektrischen Energiespeicherung (81) durch die erste Schnittstelle selektiv zu steuern, sodass für eine Spannung Uc(t) an den Anschlüssen des kapazitiven Elements dieses verbesserten Untermoduls, mit Uc(t) = Um + Uh(t), Um die Gleichspannungskomponente dieser Spannung Uc(t) und Uh(t) die Komponente der Schwingung dieser Spannung Uc(t) ist, wobei |Uh| der Maximalwert der Schwingung der Spannung Uh(t) ist, wobei die Spannung Us(t) an den Anschlüssen der zweiten Schnittstelle des Gleichspannungswandlers durch Us(t) = Usm + Ush(t) definiert ist, wobei Usm die Gleichspannungskomponente dieser Spannung Us(t) und Ush(t) die Schwingungskomponente dieser Spannung Us(t) ist, wobei Ush(t) die Beziehung Ush(t) < 0,3 * |Uh| / ns erfüllt, wobei ns die Anzahl der Vorrichtungen zum Austausch elektrischer Energie dieses verbesserten Untermoduls ist, wobei die Wechselschaltung (721, 722) Umschalter mit einer Schaltfrequenz von mehr als 10kHz enthält;
- wobei die ersten Schnittstellen (711, 712) der Gleichspannungswandler (7) in Reihe zwischen den Anschlüssen des kapazitiven Elements des Untermoduls geschaltet sind.

2. Mehrstufiger Spannungswandler (2) nach Anspruch 1, wobei die Wechselschaltung Umschalter vom Typ MOSFET-Transistor und/oder vom Typ Transistor aus Halbleitermaterial mit einer Bandlücke von mindestens gleich 2eV enthält.

3. Mehrstufiger Spannungswandler (2) nach Anspruch 2, wobei die Wechselschaltung enthält:
- entweder Umschalter vom Typ MOSFET-Transistor und wobei das verbesserte Untermodul (5) mindestens drei der Vorrichtungen zum Austausch elektrischer Energie (7) enthält;
- oder Umschalter vom Typ Transistor aus Halbleitermaterial mit einer Bandlücke von mindestens gleich 2eV mindestens zwei der Vorrichtungen zum Austausch elektrischer Energie (7) enthält.

4. Mehrstufiger Spannungswandler (2) nach einem der vorhergehenden Ansprüche, wobei jedes der Untermodule ein verbessertes Untermodul ist.

5. Mehrstufiger Spannungswandler (2) nach einem der vorhergehenden Ansprüche, mit einer nominalen Gleichspannung Unom, wobei jeder Halbzweig eine Anzahl nm von in Reihe geschalteten Untermodulen mit Unom / nm < 50000 Volt enthält.

6. Mehrstufiger Spannungswandler (1) nach einem der vorhergehenden Ansprüche, wobei die Gleichspannungswandler eine stromumkehrbare Konfiguration aufweisen.

7. Mehrstufiger Spannungswandler (1) nach Anspruch 6, wobei das Tastverhältnis α0 der Gleichspannungswandler so definiert ist, dass α0(t) = Us(t) / (Uc(t) / ns).

8. Mehrstufiger Spannungswandler (1) nach einem der vorhergehenden Ansprüche, wobei:
- die Schaltung (4) zum selektiven Überbrücken des kapazitiven Elements Umschalter umfasst, die konfiguriert sind, um selektiv eine Spannung U an die Anschlüsse des kapazitiven Elements anzulegen, die konfiguriert sind, um mit einer Frequenz f umzuschalten, und dimensioniert sind, um einem Strom I standzuhalten;
- die Umschalter der Wechselschaltung mit einer Spannung U / ns beaufschlagt werden, dimensioniert sind, um einem Strom standzuhalten, der kleiner als I ist, wobei die Umschalter der Wechselschaltung eine Schaltfrequenz haben, die größer als f ist.

9. Mehrstufiger Spannungswandler (1) nach Anspruch 8, wobei die Umschalter der Wechselschaltung eine Schaltfrequenz haben, die mindestens 4-mal größer als f ist.

10. Mehrstufiger Spannungswandler (1) nach Anspruch 8 oder 9, wobei die Umschalter der Wechselschaltung dimensioniert sind, um einem Strom standzuhalten, der mindestens 4-mal kleiner als I ist.

## Claims

1. Multi-level voltage converter (2) for converting a DC voltage into an AC voltage, comprising:
- a DC interface comprising first and second poles (201, 202), and an AC interface (203, 204, 205);
- at least one arm, comprising an upper half-arm (253) connected between the first pole (201) and an intermediate node (243), and a lower half-arm (257) connected between the second pole (202) and the intermediate node (243), each half-arm comprising several sub-modules connected in series (51, 52, 53), the sub-modules (5) each comprising a capacitive energy storage element (6) and a circuit (4) for selectively bypassing the capacitive element or connecting it in series with the other sub-modules of the half-arm; the intermediate node (243) being configured to be connected to an AC network via the AC interface (203;204;205);
- **characterised in that** at least one sub-module (5) is an improved sub-module including several electrical energy exchange devices (7), each comprising:
- an electrical energy storage device (81);
- a DC/DC converter (71) having a first interface (711, 712) and a second interface (713, 714) connected to the terminals of the electrical energy storage device (81), the DC/DC converter further comprising a switching circuit (721, 722) for selectively controlling the discharging or recharging of the electrical energy storage device (81) via the first interface, so that, for a voltage Uc(t) across the terminals of the capacitive element of this improved sub-module, Uc(t)= Um+Uh(t), Um being the DC component of this voltage Uc(t) and Uh(t) being the oscillating component of this voltage Uc(t), |Uh| being the maximum value of the voltage oscillation Uh(t), the voltage Us(t) across the terminals of the second interface of the DC/DC converter being defined by Us(t)=Usm+Ush(t), Usm being the continuous component of this voltage Us(t) and Ush(t) being the oscillating component of this voltage Us(t), Ush(t) satisfying the relationship Ush(t)<0.3*|Uh|/ns, where ns is the number of energy exchange devices of this improved sub-module, the switching circuit (721, 722) including switches having a switching frequency greater than 10 kHz;
- the first interfaces (711, 712) of the DC/DC converters (7) being connected in series between the terminals of the capacitive element of the sub-module.

2. Multi-level voltage converter (2) according to claim 1, **characterised in that** said switching circuit includes switches of the MOSFET transistor type and/or of the semiconductor material transistor type with a prohibited band at least equal to 2eV.

3. Multi-level voltage converter (2) according to claim 2, **characterised in that** said switching circuit includes either:
- switches of the MOSFET transistor type and in which the improved sub-module (5) includes at least three of said electrical energy exchange devices (7); or
- switches of the semiconductor material transistor type with a prohibited band at least equal to 2eV includes at least two of said electrical energy exchange devices (7).

4. Multi-level voltage converter (2) according to any one of the preceding claims, **characterised in that** each of said sub-modules is an improved sub-module.

5. Multi-level voltage converter (2) according to any one of the preceding claims, with a nominal DC voltage Unom, each half-arm including a number nm of sub-modules connected in series, with Unom/nm<50,000 volts.

6. Multi-level voltage converter (1) according to any one of the preceding claims, wherein said DC/DC converters have a current reversible configuration.

7. Multi-level voltage converter (1) according to claim 6, wherein the duty cycle α0 of the DC/DC converters is defined so that α0(t)=Us(t)/(Uc(t)/ns).

8. Multi-level voltage converter (1) according to any one of the preceding claims, **characterised in that**:
- the circuit (4) for selectively bypassing the capacitive element comprises switches configured to selectively apply a voltage U to the terminals of the capacitive element, configured to switch with a frequency f and dimensioned to withstand a current I;
- the switches of the switching circuit are subjected to a voltage U/ns and are dimensioned to withstand a current lower than I, the switches of the switching circuit having a switching frequency higher than f.

9. Multi-level voltage converter (1) according to claim 8, wherein the switches of the switching circuit have a switching frequency at least four times higher than f.

10. Multi-level voltage converter (1) according to claim 8 or 9, wherein the switches of the switching circuit are dimensioned to withstand a current at least four times lower than I.
